# EUROPÄISCHE PATENTANMELDUNG

(11) **EP 4 230 034 A1**
(43) Veröffentlichungstag der Anmeldung: **23.08.2023**
(21) Anmeldenummer: 23157466.6
(22) Anmeldetag: 20.02.2023
(51) Int. Cl.: A01K 63/02

(54) **TRAGBARE TRANSPORTVORRICHTUNG ZUM LEBENDTRANSPORT VON MARINEN ORGANISMEN UND ANWENDUNGEN DAVON**

(30) Priorität: 21.02.2022 DE 102022103987
(71) Anmelder: Alfred-Wegener-Institut Helmholtz-Zentrum für Polar- und Meeresforschung, 27570 Bremerhaven (DE)
(72) Erfinder: Detsch, Christian, 96342 Stockheim (DE); Lorkowski, Kai, 27578 Bremerhaven (DE); Halfer, Jörn, 27570 Bremerhaven (DE); Jähne, Gregor, 27570 Bremerhaven (DE); Thiele, Rajko, 27570 Bremerhaven (DE); Colsoul, Bérenger, 27574 Bremerhaven (DE)

(57) **Zusammenfassung**

Bekannte Transportvorrichtungen sind entweder sehr schwer oder stressen die eingebrachten Organismen. Bei der erfindungsgemäßen tragbaren Transportvorrichtung (01) ist unter Bildung eines Abstands im Transportbehälter (02) eine Transportkartusche (12) vorgesehen, die einfach ein- und ausbringbar ist. Diese weist Siebe (17, 18) auf, durch die sie in eine Wasserzufuhrvorrichtung (10) im Transportbehälter (02) eingebunden ist. Diese kann entweder im Durchlaufbetrieb oder im Kreislaufbetrieb mit Luftzufuhrvorrichtung (24) laufen. Die Transportvorrichtung (01) kann mit und ohne Wasser betrieben werden. Im wasserfreien Betrieb sorgen stab- oder scheibenförmige Befeuchtungselemente (09, 22, 37) für ein ausreichendes Wasser- bzw. Luftfeuchteangebot für die eingebrachten marinen Organismen. Die Transportvorrichtung (01) ist, insbesondere ohne Wasserfüllung, leicht und kann mittels Tragegurten (32) auf dem Rücken getragen werden. Es können aber auch eine Vielzahl von Transportvorrichtungen (01) in einem Gestell (34) auf einem Transportmittel (35) transportiert werden. Eine Anordnung als zumindest temporäres Aquakultursystem ist ebenfalls möglich. Bevorzugte Anwendung findet die tragbare Transportvorrichtung (01) bei Krebstieren, Mollusken, insbesondere Muscheln (36), Pflanzen und Makroalgen, zum Sammeln und Transportieren für Zucht- und Forschungszwecke.

## Beschreibung

Die Erfindung bezieht sich auf eine tragbare Transportvorrichtung zum Lebendtransport von marinen Organismen mit einem durch einen Deckel verschließbaren Transportbehälter, mehreren, darin angeordneten Befeuchtungselementen und einer Wasserzufuhrvorrichtung, über die Wasser den Befeuchtungselementen zuführbar ist, wobei zugeführtes Wasser über einen Bodenablauf am Transportbehälter abführbar ist, und auf Anwendungen davon.

Marine Organismen (bewegliche und sessile Arten) leben im Meerwasser. Dazu zählen Krustentiere, Mollusken, wobei zu den Mollusken (Weichtiere) beispielsweise Muscheln (z.B. Miesmuscheln, Herzmuscheln, Austern), Wasserschnecken und Kopffüßer zählen, und wirbellose Tiere wie Würmer. Weiterhin können auch beispielsweise Makroalgen und Pflanzen zu den marinen Organismen gezählt werden. Alle diese lebenden Organismen sind gegenüber einer manuellen Einsammlung und einem Transport bzw. Lagerung empfindliche und benötigen spezielle Bedingungen, um zu überleben. Krustentiere (*Crustacea*) sind relativ stressanfällig und benötigen daher spezielle Transport- und Zwischenlagerbedingungen für eine Stress- und Verlustreduzierung. Dies betrifft insbesondere lebende Krustentiere, die für eine längerfristige Haltung in Aquakulturen und nicht für den Verzehr transportiert werden. Da Krustentiere sowohl über Kiemen als auch (begrenzt) über ihre Körperoberfläche Sauerstoff aus dem Wasser aufnehmen können, können Transporte und Zwischenlagerungen in sauerstoffgesättigtem Wasser oder in feuchter Atmosphäre erfolgen. Muscheln benötigen eine besonders sorgfältige Sauerstoffversorgung, da sie sich nicht selbsttätig bewegen können. Makroalgen und Pflanzen hingegen vertragen schlecht einen Trockentransport, da sie dann schneller denaturieren.

### Stand der Technik

Aus der CN 208228096 U ist eine tragbare Transportvorrichtung für Larven der japanischen Blauen Krabbe bekannt, bei der in einem zylindrischen Transportbehälter mehrere Gitter übereinander zur Platzierung der Krebstiere vorgesehen sind. Auf den Gittern liegen scheibenförmige Befeuchtungselemente. Diese werden über eine Wasserzufuhrvorrichtung dauerhaft feucht gehalten. Dazu befindet sich im Deckel der Transportvorrichtung, der diese verschließt, ein Wassertank, aus dem Wasser mittels einer elektrischen Druckpumpe über horizontale Verteilerarme auf die Befeuchtungselemente versprüht wird. Diese wiederum sind mit einer zentralen Achse verbunden sind, die über einen Handgriff an der Oberseite des Deckels gedreht werden kann. So wird eine Wasserverteilung über die gesamte Oberfläche der Befeuchtungselemente erreicht. Unterhalb der Gitter wird Schmutzwasser aufgefangen und einem Schmutzwassertank auf der Unterseite der Transportvorrichtung zugeführt. Der Schmutzwassertank ist über einen Abfluss entleerbar. Somit wird die Transportvorrichtung im Durchfluss betrieben. Um Verletzungen der eingebrachten Krustentiere beim Transport zu vermeiden, werden diese durch umrandende Zäune an den Gittern voneinander separiert. Die Einbringung / Entnahme der Krustentiere erfolgt durch sukzessive Montage / Demontage der einzelnen Gitter an / von der zentralen Achse. Zuvor muss der mit dem Wassertank beladene Deckel entfernt werden. Über den Handgriff kann die Transportvorrichtung mit der Hand transportiert werden. Die elektrische Druckpumpe benötigt eine Batterie zur Stromversorgung. Zusammen mit dem Wasser bildet sie am Kopf Transportvorrichtung ein zu berücksichtigendes, ungünstig verteiltes Gewicht für den Transport und die Aufstellung der Transportvorrichtung.

### Aufgabenstellung

Ausgehend von der zuvor beschriebenen gattungsbildenden Transportvorrichtung ist die **Aufgabe** für die vorliegende Erfindung darin zu sehen, diese so weiterzubilden, dass eine bessere Handhabbarkeit erreicht wird. Dabei soll auch das Handling der zu transportierenden marinen Organismen vereinfacht werden, wobei Stress- und Verletzungsfreiheit gewährleistet bleiben sollen. Schließlich soll die Transportvorrichtung in unterschiedlichen Modi betreibbar und vielseitig für verschiedene marine Organismen einsetzbar sein. Die erfindungsgemäße **Lösung** dieser Aufgabe ist dem Haupanspruch zu entnehmen. Vorteilhafte Weiterbildungen der erfindungsgemäßen Transportvorrichtung sind den Unteransprüchen zu entnehmen. Besondere Anwendungen der Transportvorrichtung sind den Nebenansprüchen zu entnehmen.

Bei der Lösung der Aufgabe ist erfindungsgemäß vorgesehen, dass in dem Transportbehälter eine entnehmbare Transportkartusche zur Aufnahme der marinen Organismen und der Befeuchtungselemente angeordnet ist, die mit einer Wandung sowie einer oberen und einer unteren Stirnseite ausgebildet ist, wobei die obere Stirnseite durch den Deckel des Transportbehälters hindurchgeführt und von einem Kartuschendeckel gebildet ist und in der Wandung in der Nähe zum Kartuschendeckel ein erstes Sieb sowie in der unteren Stirnseite zumindest ein weiteres Sieb angeordnet sind, wobei die Wandung und die untere Stirnseite mit einem Abstand zum Transportbehälter angeordnet sind. Die erfindungsgemäße Transportvorrichtung ist als doppeltes Gefäß (also kleineres Gefäß in größerem Gefäß) ausgebildet. Im Transportbehälter befindet sich eine Transportkartusche, die zu Be- und Entladungszwecken - nach Entfernen des Deckels des Transportbehälters - einfach herausnehmbar ist. In der Transportkartusche werden sowohl die zu transportierenden marinen Organismen als auch die Befeuchtungselemente gelagert. Weiterhin ist die Transportkartusche mit zumindest zwei Sieben ausgestattet. Ein Sieb befindet sich im Boden und zumindest ein weiteres Sieb in der Wandung der Transportkartusche. Dadurch und durch die Beabstandung der Transportkartusche zum Transportbehälter kann das Wasser in der Transportkartusche über den Transportbehälter zirkulieren, ohne dass Tiere entweichen können. Außerdem kann das Wasser beim Entnehmen der Transportkartusche nach unten auslaufen und verbleibt im Transportbehälter. Ein Einsetzen in den bereits mit Wasser befüllten Transportbehälter ist ebenfalls möglich. Das Wasser steigt dann über das Sieb im Boden kontinuierlich in der Transportkartusche hoch. Die obere Seite des Transportkartusche ist im verschlossenen Zustand des Transportbehälters durch dessen Deckel hindurchgeführt. Dadurch ist zum einen die Transportkartusche im Transportbehälter gut zentriert, um anderen ist sie für gegebenenfalls vorhandene Anschlussleitungen erreichbar. Diese können durch einen Kartuschendeckel geführt werden, der die Transportkartusche verschließt und Griffmittel aufweisen kann, an denen die Transportkartusche in den Transportbehälter eingesetzt und aus diesem wieder entnommen werden kann, ohne dabei geöffnet zu werden.

Von der Formgebung her sind beliebige Querschnitte, beispielsweise quaderförmig, für den Transportbehälter und die Transportkartusche umsetzbar, wobei diese immer in den Transportbehälter unter Spaltbildung einsetzbar sein muss. Die genannten Vorteile des doppelten Gefäßes werden noch unterstützt, wenn gemäß einer ersten vorteilhaften und bevorzugten Erfindungsausgestaltung vorgesehen ist, dass der Transportbehälter und die Transportkartusche zylinderförmig ausgebildet sind. Damit werden auch Teile bei der Transportvorrichtung eingesetzt, die kommerziell einfach erhältlich sind. Zylindrische Gefäße sind einfach zu reinigen und bergen keine Verletzungsgefahr für die eingebrachten marinen Organismen. Weiterhin ist die Größe des Transportbehälters skalierbar, wobei sinnvolle Größen wegen der Wasserbeladung eingehalten werden sollen. Ist eine Nutzung ausschließlich ohne (flüssiges) Wasser vorgesehen, kann der Transportbehälter auch noch größere Volumina umfassen.

Durch die Siebe in der Transportkartusche kann das Wasser über den Transportbehälter zirkulieren. Dabei ist auch ein einfacher Austausch mitumfasst, der beispielsweise manuell über eine Handpumpe erfolgen kann. Komfortabler ist es jedoch, wenn gemäß einer nächsten vorteilhaften und bevorzugten Modifikation der Erfindung vorgesehen ist, dass eine Luftzufuhrvorrichtung zumindest mit einem Zufuhrventil, zumindest einem Luftverteiler und einem Abfuhrventil vorgesehen ist, wobei das Zufuhrventil und das Abfuhrventil im Kartuschendeckel angeordnet sind. Die Luftzufuhr bewirkt dann einen Airlift. Zusammen mit der aus dem zumindest einen Luftverteiler ausgeblasenen Luft steigt das Wasser in der Transportkartusche nach oben. Dort verlässt es über das zumindest eine Sieb in der Wandung die Transportkartusche und wird im Spalt im Transportbehälter wieder nach unten gesogen. Dort tritt es über das Sieb im Boden wieder in die Transportkartusche ein. Auf diese Weise wird eine schonende Zirkulation des Wassers durch die Transportkartusche erreicht. Für bestimmte zu transportierende marine Organismen, beispielsweise Herzmuscheln, ist der Aufbau eines Überdrucks in der Transportkartusche erforderlich, damit sich die Muscheln während des Transportes nicht öffnen. Von daher ist es gemäß einer nächsten Erfindungsmodifikation bevorzugt und vorteilhaft, wenn der Transportbehälter druckdicht mit dem Deckel verschließbar ist und das Zufuhrventil eine Druckanzeige aufweist, wobei das Abfuhrventil als einstellbares Überdruckventil ausgebildet ist. Dadurch kann der Druck in der Transportkartusche über die Luftzufuhr manuell gut eingestellt werden und bleibt während des Transports im verschlossen Transportbehälter auch sicher erhalten. Ein unerwünscht überhöhter Druck wird über das einstellbare Überdruckventil automatisch entlastet.

Weiterhin kann je nach zu transportierendem Organismus eine unterschiedliche Luftverteilung vorteilhaft sein. Gemäß einer weiteren Erfindungsausgestaltung ist es daher bevorzugt und vorteilhaft, wenn der zumindest eine Luftverteiler in der Transportkartusche in der Nähe der unteren Stirnseite angeordnet ist oder mehrere Luftverteiler in mehreren radialen Ebenen übereinander angeordnet sind. Der einzelner Luftverteiler eignet sich besonders, wenn sich die zu transportierenden marinen Organismen bewegen können, beispielsweise Krustentiere. Diese können sich dann in Richtung auf den einen Luftverteiler bewegen. Bei sessilen marinen Organismen, beispielsweise Muscheln, Algen oder Pflanzen, ist es günstiger, die Luftverteilung in mehreren radialen ebenen übereinander in der Transportkartusche vorzunehmen, sodass die Luft zu den Organismen kommt und nicht umgekehrt. Wenn die Transportvorrichtung stationär gelagert oder aufgestellt wird, kann die Luftzufuhrvorrichtung mit einer externen Vorrichtung verbunden sein. Für den autarken Transport ist es bevorzugt und vorteilhaft, wenn die Luftzufuhreinrichtung eine Batterie zur Energieversorgung umfasst, sodass Umgebungsluft eingepumpt werden kann. Damit reicht eine relativ kleine Batterie aus, sodass sie leicht unterbring- und transportierbar ist. Luftzufuhr über eine entsprechende Vorratsdose ist ebenfalls möglich.

Die Transportkartusche kann nach Abnehmen des Kartuschendeckels in den Transportbehälter eingebracht werden. Dabei verbleibt ein Spalt zwischen beiden, damit das Wasser zirkulieren kann. Dafür ist es gemäß einer nächsten Erfindungsausgestaltung bevorzugt und vorteilhaft, wenn die Transportkartusche im Transportbehälter mittels zumindest eines Abstandshalters zentriert anordenbar ist, wobei der Abstandshalter die Wasserzufuhrvorrichtung nicht behindert. Hierbei kann es sich beispielsweise um einzelne Abstandshalter aus einem elastischen Material handeln, die an die Innenseite der Transportkartusche geklebt sind. Es kann sich aber auch um einen geschlossenen Ring handeln, der Durchlassöffnungen für die Wasserströmung aufweist.

Die mit der Erfindung beanspruchte Transportvorrichtung dient vor allem dem Wohl der zu transportierenden marinen Organsimen (Tiere, Pflanzen, Algen etc.). Um dieses ständig kontrollieren zu können, ist es gemäß einer nächsten Erfindungsmodifikation bevorzugt und vorteilhaft, wenn die Transportkartusche und der Transportbehälter zumindest im Bereich der eingebrachten Transportkartusche transparent ausgebildet sind. Dadurch sind nicht nur die zu transportierenden Organismen beobachtbar, auch die Medien, wie Wasser und Luft sowie deren ordnungsgemäße Zirkulation sind gut einseh- und damit kontrollierbar.

Bei der Erfindung befinden sich die Befeuchtungselemente in der Transportkartusche. Dort können sie über entsprechende Befestigungselemente regelmäßig angeordnet sein, beispielsweise in mehreren Ebenen. Da Krustentiere einen großen Drang zum Klettern haben, ist es vorteilhaft, wenn die einzelnen Ebenen durchlässig für die Tiere sind, beispielsweise durch Öffnungen oder in Form eines "Tannenbaums" mit einem Abnehmenden Durchmesser. Bevorzugt und vorteilhaft ist es gemäß einer nächsten Ausgestaltung der beanspruchten Transportvorrichtung daher, wenn die Befeuchtungselemente stabförmig oder scheibenförmig ausgebildet und lose in die Transportkartusche einbringbar sind, wobei die stabförmigen Befeuchtungselemente über die Höhe der Transportkartusche ein vielfach verzweigtes Gerüst bilden und die scheibenförmigen Befeuchtungselemente sich über den gesamten Querschnitt der Transportkartusche erstrecken und über deren Höhe ein beabstandetes Etagensystem bilden. Durch die lose Einbringbarkeit benötigen die stabförmigen Befeuchtungselemente keine weiteren Befestigungsmittel, sondern werden einfach überkreuzend in die Transportkartusche eingestellt. Die scheibenförmigen Befeuchtungselemente erstrecken sich über den gesamten Querschnitt der Transportkartusche und werden entsprechend radial geführt. Sie können unter Zwischenlage von einfachen Abstandshaltern daher auch lose in der Transportkartusche aufgeschichtet werden. Zwischen die sich bildenden mehreren Radialebenen können dann insbesondere Muscheln beim Schichtaufbau zwischengelegt werden. Das vielfach verzweigte Gerüst eignet sich hervorragend zur Erkletterung durch beispielsweise Krustentiere oder Schnecken, ohne diese einzuengen oder zu verletzen. Die scheibenförmigen Befeuchtungselemente bilden ein Etagensystem, in dessen einzelnen Ebenen, die benachbart einen Abstand aufweisen, beispielsweise Muscheln sicher gelagert und mit Feuchtigkeit versorgt werden können. Da diese in der Regel weitgehend sessil sind, ist es vorteilhaft, wenn sie über und unter Befeuchtungselementen gelagert werden können, die sich über den gesamten Querschnitt der Transportkartusche erstrecken. Freiräume zum Klettern benötigen Muscheln nicht. Makroalgen und Pflanzen benötigen in der Regel eine ähnliche axiale Schichtung der Befeuchtungselemente wie sessile Tierarten, wobei sie aber auch mit stabförmigen Befeuchtungselementen ohne Weiteres kombiniert werden können, beispielsweise besonders langfädige Algen oder Seegras.

Wenn die Befeuchtungselemente bevorzugt und vorteilhaft aus einem schwammartigen Schaumstoffmaterial bestehen, das Wasser aufsaugen und halten kann, werden die Handhabung und der Komfort noch erhöht. Die Feuchte wird gleichmäßig in der Transportkartusche verteilt und gehalten. Die beweglichen Tiere erklettern unmittelbar die feuchten, weichen Elemente, wobei jede Verletzungsgefahr ausgeschlossen ist. Die sessilen Organismen können verletzungsfrei auf den feuchten, weichen Elementen gelagert werden. Derartige Befeuchtungselemente zeigen neben den Vorteilen der Bewahrung der Feuchtigkeit und der Vergrößerung der feuchten Oberfläche noch einen weiteren Vorteil. Dieser besteht gemäß einer weiteren Erfindungsfortgestaltung bevorzugt und vorteilhaft darin, dass sie selbst als Biofilter arbeiten und dadurch das Wasser reinigen. Dazu werden sie vor dem Einbringen in die Transportkartusche mit einer kurzen Vorlaufzeit in einen passenden Biofilter gegeben und dabei vorbehandelt, beispielsweise mit einer speziellen Bakterienkultur. Im feuchten Zustand werden dann die vorbehandelten Befeuchtungselemente in die Transportkartusche gegeben und dort weiterhin feucht gehalten, insbesondere durch rasches Verschließen des Deckels des Transportbehälters.

Für einen Transport von kletternden Tieren, beispielsweise Krustentieren, ist die Einbringung von stabförmigen Befeuchtungselementen vorteilhaft, die sich über die gesamte Höhe der Transportkartusche erstrecken können. Ein unterteilendes Gitter ist nicht erforderlich. Anders verhält es sich, wenn beispielsweise Muscheln transportiert werden sollen. Diese würden in der nicht-unterteilten Transportkartusche unmittelbar aufeinanderliegen und könnten sich gegenseitig im Öffnen behindern oder sogar verletzen. Deshalb ist es gemäß einer nächsten Erfindungsmodifikation bevorzugt und vorteilhaft, wenn eine Fixiervorrichtung mit zumindest einem Maschengitter zur Lagerung der marinen Organismen vorgesehen ist, die lose in die Transportkartusche einbringbar ist. Bevorzugt können mehrere Maschengitter eingesetzt werden, die abwechselnd mit scheibenförmigen Befeuchtungselementen einen losen Stapelturm übereinander bilden. Die seitliche Führung erfolgt dann über die Wandung der Transportkartusche. Insbesondere für die Lagerung von empfindlichen Austern ist es des Weiteren vorteilhaft, denn die Maschen der Maschengitter radial sechseckig (hexagonförmig) ausgebildet sind. In den einzelnen radialen Ebenen der Fixiervorrichtung sind dann wabenförmige Maschengitter angeordnet. Die Muscheln können dann besonders komfortabel zwischen zwei gegenüberliegenden Ecken der sechseckigen Maschen in mehreren Maschengittern übereinander in der Fixiervorrichtung fixiert sein. Dabei können sie sowohl vertikal als auch horizontal gelagert werden. Insbesondere Austern sollten bevorzugt horizontal gelagert werden, sodass etwas Wasser zum Atmen in der unteren, konvexen Muschelschale stehen kann). Miesmuscheln können problemlos aufrecht oder schräg gelagert werden.

Insbesondere wenn Tiere in der beanspruchten Transportvorrichtung über einen längeren Zeitraum gelagert werden sollen, ist es des Weiteren noch besonders vorteilhaft und bevorzugt, wenn ein mit Nährlösung füllbarer Futtertank am Deckel angeordnet ist, der mit der Wasserzufuhr verbunden ist. Die Futterverteilung erfolgt dann über die Wasserströmung (dann bevorzugt im Kreislaufbetrieb, um das Futter nicht gleich wieder auszuspülen) und erreicht gleichmäßig alle eingebrachten Organismen. Im Anschluss ist jedoch eine Frischwasserzufuhr vorteilhaft, um Vergiftungen durch Fäkalien oder ähnlichem zu vermeiden. Gleichermaßen kann auch Düngelösung für Pflanzen oder Algen eingebracht werden.

Zur einfachen Handhabung der beanspruchten Transportvorrichtung ist gemäß einer weiteren Modifikation bevorzugt und vorteilhaft vorgesehen, dass zumindest ein Transportgriff und/oder Transportgurt am Transportbehälter befestigt ist. Ein Transportgriff ist in der Regel am Deckel der Transportvorrichtung befestigt. Er ist geeignet, den Behälter über kurze Strecken zu transportieren, da dieser mit der Hand an der Körperseite gehalten wird. Vorteilhafter ist es, wenn beispielsweise zwei Transportgurte vorgesehen sind, sodass die Transportvorrichtung wie ein Rucksack getragen werden kann. Sollen marine Organismen aus ihrem natürlichen Habitat gesammelt werden, beispielsweise Krabben oder Gammariden aus dem Wattenmeer oder Austern, kann die Transportvorrichtung vom Sammler einfach geschultert und über größere Strecken ohne großen Kraftaufwand getragen werden. Auch können die Transportgurte an der Seite der Transportvorrichtung angeschlagen sein und üben damit nicht so große Kräfte auf den Deckel und dessen Befestigung aus wie ein Transportgriff.

Wesentlich für den stressfreien Transport der marinen Organismen ist deren dauerhafte und gute Versorgung mit Sauerstoff, das sich aus Wasser oder feuchte aufnehmen können. Der Transport kann daher sowohl "nass" (mit eingefülltem Wasser) als "feucht" (ohne eingefülltes Wasser, aber mit befeuchteten Befeuchtungselementen) erfolgen. Es versteht sich, dass der feuchte Transport insbesondere beim individuellen Tragen durch eine Person bevorzugt wird, da Wasser bekanntlich relativ schwer ist. Eine Wasserfüllung wird eher beim Transport auf einem Fahrzeug oder beim stationären Betrieb der Transportvorrichtung bevorzugt werden. Eine hohe Effizienz wird dabei erreicht, wenn gemäß einer nächsten Erfindungsfortführung vorteilhaft und bevorzugt vorgesehen ist, dass die Wasserzufuhrvorrichtung als Durchflusssystem ausgebildet ist. Diese Ausbildung eignet sich insbesondere, wenn die Transportvorrichtung temporär oder dauerhaft stationär angeordnet ist. Das Wasser, insbesondere natürliches oder künstliches Meerwasser, kann dann beispielsweise über ein Ventil im Kartuschendeckel zugeführt und über ein Ventil im Boden des Transportbehälters abgeführt werden. Dabei ist darauf zu achten, dass das einlaufende Wasser die gelagerten marinen Organismen nicht übermäßig mechanisch belastet. Über den Bodenablauf werden dann auch Verschmutzungen aus dem Wasser (Futterreste, Exkremente) ausgespült. Dabei ist in der Einstellung zwischen Zufluss und Abfluss darauf zu achten, dass sich ein ausreichende Wasseraufstau einstellt. Beim Durchflussbetrieb kann ohne Luftzufuhr gearbeitet werden, da das ständig nachfließende frische Wasser ausreichend Sauerstoff enthält. Die Wasserwerte sind immer optimal.

Ebenso kann bei der mit der Erfindung beanspruchten Transportvorrichtung bevorzugt und vorteilhaft vorgesehen sein, dass die Wasserzufuhrvorrichtung als Kreislaufsystem ausgebildet ist, wobei eine Luftzufuhreinrichtung vorgesehen ist. Diese Ausgestaltung eignet sich besonders für den individuellen Transport, insbesondere beim oben beschriebenen "Rucksacktransport" durch eine einzelne Person. Externe Versorgungsleitungen sind dabei nicht vorgesehen. Vielmehr wird eine Wasserumwälzung und gleichzeitige Belüftung durch eine Luftzufuhr, beispielsweise ebenfalls über ein Ventil im Kartuschendeckel, erreicht. Die Luft wird beispielsweise durch ein Rohr in der Mitte der Transportkartusche nach unten gedrückt und gelangt dort durch einen Ausströmer in das Wasser in der Transportkartusche. Dort steigt es nach oben und wirkt in der Wasserbewegung dabei wie ein Airlift oder Mammutpumpe. Die Luftzufuhr kann batteriebetrieben erfolgen, sie ist daher autark und transportabel. Weiterhin kann die Luftzufuhr dauerhaft oder temporär in Intervallen erfolgen. Das Wasser sollte im Kreislaufbetrieb (synonym Umlaufbetrieb) regelmäßig getauscht werden, um die Tiere in Intervallen wieder mit sauberem und sauerstoffgesättigtem Wasser zu versorgen. Vorteilhaft ist hierbei, wenn die Befeuchtungselemente als Biofilter arbeiten und das umgewälzte Wasser, beispielsweise in einem rezirkulierenden Aquakultursystem, biologisch reinigen. Dadurch kann die Transportvorrichtung im gefüllten Zustand auch als abgeschlossenes System für einen gewissen Zeitraum autark arbeiten. Vorteilhaft bei einem Betrieb mit Wasser ist zudem, dass die Transportvorrichtung über das Wasser temperiert werden kann, was den Komfort für die Tiere erhöht.

Bei einem längeren Transport der Transportvorrichtung insbesondere durch nur eine Person, beispielsweise im Wattenmeer, kann es sinnvoll sein, die Wasserzufuhrvorrichtung gar nicht zu nutzen. Das Wasser wird vollständig aus der Transportkartusche abgelassen und die eingebrachten marinen Organismen werden ausschließlich mit wassergesättigter Luft, durch die befeuchteten Befeuchtungselemente, versorgt. Dies reduziert deutlich das Gewicht der Transportvorrichtung und schlechte Wasserwerte werden ausgeschlossen. Es empfiehlt sich in diesem Betriebsmodus, in Zeitintervallen die Luftzufuhreinrichtung zu betätigen, um entstandenes CO₂ auszublasen und einen kühlenden Effekt für die gelagerte marinen Organismen zu erzeugen. Dies gilt insbesondere bei einem Transport unter scheinender Sonne (und wenn die Behälter transparent sind), da kein temperierendes Wasser eingesetzt wird.

Neben der Anwendung der mit der Erfindung beanspruchten Transportvorrichtung im individuellen Transport, beispielsweise von einer Person in das Wattenmeer, ist auch ein kumulierter Transport von mehreren Transportvorrichtungen besonders sinnvoll. Deshalb ist eine Anwendung der beanspruchten Transportvorrichtung besonders bevorzugt und vorteilhaft, bei der mehrere Transportvorrichtungen in einem Gestell angeordnet sind, wobei das Gestell auf einem bewegbaren Transportmittel angeordnet ist. Dabei kann das Gestell so ausgebildet sein, dass die einzelnen Transportvorrichtungen in Reihen und Spalten nebeneinander eingestellt werden. Sind zentrale Versorgungsleitungen vorhanden, können alle Transportvorrichtungen entsprechend angeschlossen werden. Bei dem bewegbaren Transportmittel kann es sich beispielsweise um einen Handkarren oder einen Lkw oder einen Anhänger für Fahrrad oder Lkw handeln. Beim Transport auf einem bewegten Gefährt kann es ebenfalls sehr vorteilhaft sein, ohne zugeführtes Wasser zu transportieren (Feuchttransport), was erhebliches Gewicht und damit Treibstoff für das Gefährt einspart. Letztendlich hängt die Wahl zwischen Transport mit oder ohne Wasser aber von der Transportdauer und der Fähigkeit der Tiere, Sauerstoff über die Kiemen und Körperoberfläche aufzunehmen, ab.

Alternativ kann die Transportvorrichtung aber auch stationär angeordnet sein. Dazu kann sie zuvor transportiert worden sein. In einer stationären Anordnung kann die Transportvorrichtung, insbesondere zusammen mit einer Vielzahl von weiteren Transportvorrichtungen, dann bevorzugt und vorteilhaft als dauerhaftes Aquakultursystem angewendet und genutzt werden, insbesondere natürlich mit Wasserbefüllung. Auch bei dieser Anwendung können die einzelnen Transportvorrichtungen im Durchfluss- oder Kreislaufbetrieb genutzt werden, wobei sich durch die Stationarität der Durchflussbetrieb empfiehlt. Dabei kann natürlich auch schon jede einzelne Transportvorrichtung als Aquakultursystem (stationäre oder mobil, Durchfluss- oder Umwälzbetrieb) angesehen werden. Besonders geeignet ist die mit der Erfindung beanspruchte tragbare Transportvorrichtung für den Transport von marinen Organismen, insbesondere lebende Krustentiere, beispielsweise kleinere Krebse, wie Flohkrebse, aber auch für größere Tiere oder deren Larven bzw. Jungtiere, außerdem von Mollusken (beispielsweise alle Arten von Muscheln und Seeschnecken), Würmern, Pflanzen und Algen, insbesondere Makroalgen. Es können sowohl bewegliche als auch sessile marine Organismen gesammelt und transportiert werden. Eine Skalierung der Behältergröße ist entsprechend möglich, wobei das Gesamtgewicht und die Transportart in Relation zu setzen ist. Weitere Erläuterungen zu der vorliegenden Erfindung und ihre jeweils angesprochenen Modifikationen können den nachfolgend aufgezeigten Ausführungsbeispielen entnommen werden.

### Ausführungsbeispiele

Nachfolgend wird die mit der vorliegenden Erfindung beanspruchte Transportvorrichtung und ihre bevorzugten Modifikationen und Anwendungen in Ausführungsbeispielen zum besseren Verständnis der Erfindung noch weitergehend erläutert. Dabei zeigt die
- **Fig.** 1: tragbare Transportvorrichtung in einer perspektivischen Gesamtansicht,
- **Fig.** 2: eine Anordnung von mehreren Transportvorrichtungen auf einem Anhänger,
- **Fig.** 3: einen schematischen Querschnitt durch eine Transportkartusche für Muscheln,
- **Fig.** 4: in der Draufsicht ein Maschengitter zum Transport von Muscheln und die
- **Fig.** 5: Details im Deckelbereich mit Futtertank und Druckanzeige.

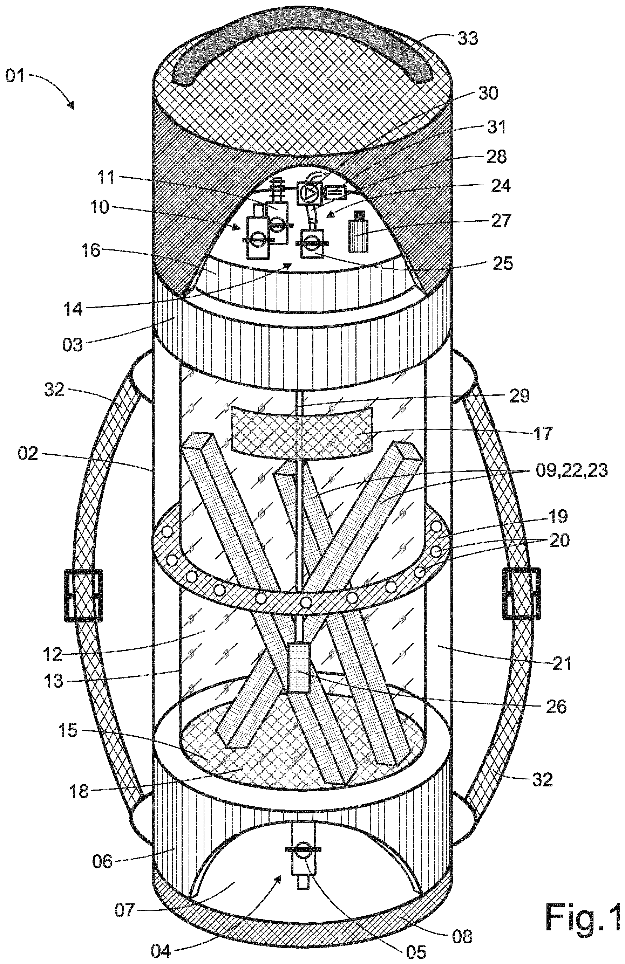

In der **Fig.** 1 ist eine tragbare Transportvorrichtung **01** zum Lebendtransport von Krustentieren, beispielsweise Gammariden oder asiatischen Strandkrabben (ca. 1 cm Körperlänge), dargestellt. Sie weist einen zylindrischen Transportbehälter **02** auf, der mit einem schraubbaren Deckel **03** verschließbar ist. Der Transportbehälter **02** besteht im gewählten Ausführungsbeispiel aus einem transparenten Kunststoffrohr und weist im Ausführungsbeispiel einen Durchmesser von 110 mm und eine Länge von ca. 300 mm auf. Diese Abmessungen sind aber auch sinnvoll skalierbar. An seinem unteren Ende weist der Transportbehälter **02** einen Bodenablauf **04** auf. Durch Öffnen eines mit diesem verbundenen Ventils **05,** beispielsweise geeignet für die Ankopplung eines einfachen Gartenschlauchs, kann zugeführtes Wasser aus dem Transportbehälter **02** abgelassen werden. An beiden Enden des Transportbehälters **02** sind leicht konische, offene Endmuffen **06** aufgesteckt, um Ventile und Anschlüsse vor mechanischer Einwirkung zu schützen. Beide Endmuffen **06** weisen Ausschnitte **07** auf, um dahinterliegende Vorrichtungen zugänglich zu halten. Die Endmuffen **06** bestehen ebenfalls aus Kunststoff, sind aber nicht lichtdurchlässig, um die eingebrachten Tiere vor Sonneneinstrahlung zu schützen. Die obere Endmuffe **06** ist stirnseitig geschlossen. Im gezeigten Ausführungsbeispiel ist sie so stabil (aber lösbar) am Transportbehälter **02** befestigt, dass sie einen Transportgriff **33** halten kann. Die untere Endmuffe **06** ist stirnseitig offen und weist einen Gummiring **08** auf ihrer Wandung auf. Sie dient der sicheren Aufstellung der Transportvorrichtung **01** auf einem ebenen Untergrund und schützt vor Erschütterungen beim Transport. Im Transportbehälter **02** sind mehrere Befeuchtungselemente **09** angeordnet. Weiterhin ist im oberen Bereich eine Wasserzufuhrvorrichtung **10** vorgesehen, über die Wasser den Befeuchtungselementen **09** zuführbar ist. Über ein weiteres Ventil **11** in der Wasserzufuhrvorrichtung **10** kann beispielsweise über einen Gartenschlauch Wasser in das Innere des Transportbehälters **02** eingelassen werden.

Im Inneren des Transportbehälters **02** befindet sich eine entnehmbare, Transportkartusche **12** zur Aufnahme der Krustentiere. Die Transportkartusche **12** ist im gezeigten Ausführungsbeispiel ebenfalls zylindrisch ausgebildet und besteht aus einem transparenten Kunststoffrohr mit einem Durchmesser von 90 mm. Die Länge beträgt ebenfalls ca. 300 mm. Die Transportkartusche **12** weist eine Wandung **13,** eine obere Stirnseite **14** und eine untere Stirnseite **15** auf. Die obere Stirnseite **14** ist durch den Deckel **03** des Transportbehälters **02** hindurchgeführt und wird von einem Kartuschendeckel **16** gebildet. In der Wandung **13** ist im oberen Bereich der Transportkartusche **12** ein erstes Sieb **17,** in der unteren Stirnseite **15** ein weiteres Sieb **18** angeordnet. In der Wandung **13** können, in gleicher oder variierender Höhe am Umfang verteilt, neben dem ersten Sieb **17** weitere Siebe angeordnet sein. Die Siebe **17, 18,** dienen dem Wasserdurchtritt bei gleichzeitiger Rückhaltung der aufgenommenen Tiere (Maschenweite in einem Bereich von 1 mm). Durch die Durchführung der Transportkartusche **12** durch den Deckel **03** wird diese im Transportbehälter **02** in ihrem oberen Bereich zentriert gelagert. Eine weitere zentrierte Lagerung der Transportkartusche **12** ergibt sich durch einen Abstandshalter **19,** der im gezeigten Ausführungsbeispiel ringförmig ausgebildet und ungefähr mittig im Transportbehälter **02** angeordnet ist. Um die Wasserzirkulation über die Wasserzufuhreinrichtung **10** nicht zu behindern, weist er mehrere Durchgangsöffnungen **20** auf. Die Transportkartusche **12** ist im Deckel **02** und im Abstandshalter **19** gleitend gelagert, sodass sie durch einfaches Schieben eingebracht und entnommen werden kann. Durch die zentrierte Lagerung der Transportkartusche **12** im Transportbehälter **02** ergibt sich zwischen beiden ein ringförmiger Spalt **21,** in dem sich Wasser aus der Wasserzufuhrvorrichtung **10** befindet.

In der Transportkartusche **12** befinden sich die Befeuchtungselemente **09,** die im gezeigten Ausführungsbeispiel als stabförmige Befeuchtungselemente **22** stabförmig ausgebildet und einfach lose und einander überkreuzend in die Transportkartusche **12** eingestellt sind. Sie bilden ein vielfach verzweigtes Klettergerüst, das von den Krustentieren stressfrei angenommen wird und gleichzeitig für einen gute Durchfeuchtung des gesamten Innenraums der Transportkartusche **12.** Die stabförmige Befeuchtungselemente **22** bestehen aus einem schwammartigen Schaumstoffmaterial, das viel Wasser aufsaugen und halten kann. Die darauf herumkletternden nicht sessilen marinen Organismen, beispielsweise Krustentiere, können über ihre Körperoberfläche (oder Kiemen) gut die Feuchtigkeit aufnehmen. Im gezeigten Ausführungsbeispiel sind die stabförmigen Befeuchtungselemente **22** biologisch mit einem Bakterienbesatz vorbehandelt und wirken so gleichzeitig als Biofilter **23.**

Die Transportvorrichtung **01** weist auch eine Luftzufuhrvorrichtung **24** auf. Diese umfasst im gewählten Ausführungsbeispiel ein Zufuhrventil **25,** einen Luftverteiler **26** und ein Abfuhrventil **27.** Über das Zufuhrventil **25** wird über einen Luftschlauch **28** Luft in ein Luftrohr **29** eingeblasen. Die Zufuhr erfolgt über eine kleine Pumpe **30,** die von einer Batterie **31** mit Antriebsenergie versorgt wird. Die Luft wird in dem Luftrohr **29** nach unten gedrückt und tritt über den Luftverteiler **26** (Ausströmer) in der Nähe der unteren Stirnseite **15** der Transportkartusche **12** in diese aus. Befindet sich in dieser Wasser, so reißt die nach oben strömende Luft das Wasser mit und wirkt als Airlift. Befindet sich kein Wasser in der Transportkartusche **12,** kühlt die aufsteigende Luft die Tiere und bläst Atemabgase aus. Das Abfuhrventil **27** fungiert als Sicherheitsventil und dient dem Abbau von Überdruck in der Transportkartusche **12.** Das Zufuhrventil **25** und das Abfuhrventil **27** sind beide im Kartuschendeckel **16** angeordnet.

Die gezeigte Transportvorrichtung **01** dient insbesondere dem manuellen Transport durch eine einzelne Person. Zur Transporterleichterung weist die Transportvorrichtung **01** zwei verstell- und abnehmbare Transportgurte **32** auf, mittels denen die Transportvorrichtung **01** auf dem Rücken getragen werden kann. Der Transportgriff **33** am Deckel **03** erleichtert kurze Transporte von Hand.

Im Folgenden wird nochmals ein kurzer Überblick über die verschiedenen Betriebsmodi der tragbaren Transportvorrichtung **01** im Bereich der Wasserzufuhrvorrichtung **10** und der Luftzufuhrvorrichtung **24** gegeben:
- mit Einsatz von Wasser (sorgt für die richtige Temperierung)
   - Durchflussbetrieb - das Wasser wird oben zugeführt und unten abgeführt
   - Kreislaufbetrieb - das Wasser zirkuliert durch eine Luftzufuhr von oben (beispielsweise 24h bei 15°C)
- ohne Einsatz von Wasser
   - die feuchten Befeuchtungselemente werden dauerhaft oder in Intervallen mit Luft beblasen (beispielsweise bei einer Transportdauer von 7h wird nach 6h für 20 min Luft eingeblasen, Transporttemperatur 18°C), was für Kühlung und Gasabfuhr sorgt).

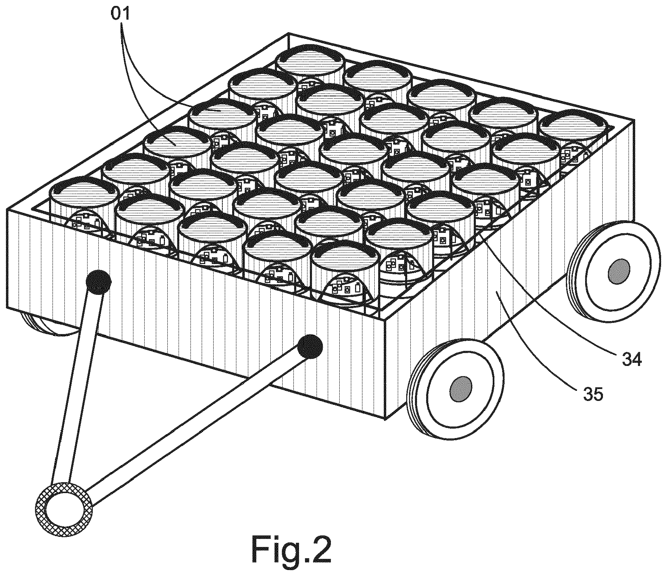

Die **Fig.** 2 zeigt eine Anordnung von mehreren Transportvorrichtungen **01** in einem Gestell **34** in Reihen und Spalten nebeneinander. Die Transportvorrichtungen **01** können einfach in das Gestell **34** eingestellt und diesem wieder entnommen werden. Außerdem werden sie zuverlässig während eines Transport senkrecht gelagert. Dieser kann auf einem bewegbaren Transportmittel **35,** beispielsweise einem Anhänger, erfolgen. Alternativ kann das Gestell auch auf einem immobilen Untergrund, beispielsweise eine Betonplatte, aufgestellt werden, sodass die Transportvorrichtungen **01** - zumindest temporär - zu einem stationären Aquakultursystem zusammengeschaltet sind. Eine Versorgung über stationäre Versorgungseinrichtungen ist dann einfach umzusetzen.

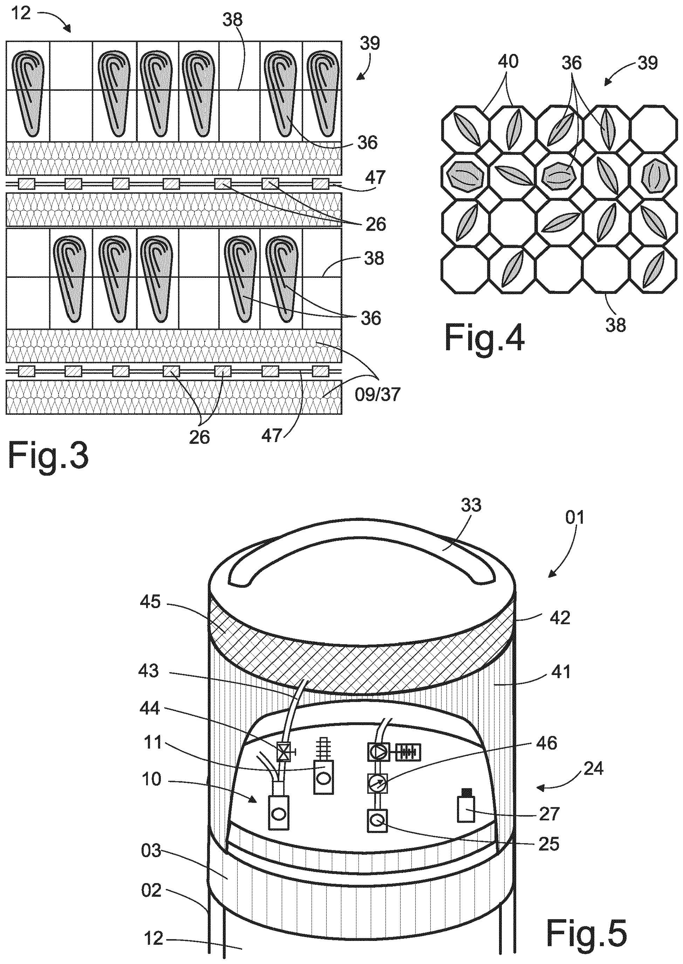

Die **Fig.** 3 zeigt im schematischen Querschnitt die Transportkartusche **12** für eine besondere Ausführungsform zur Lagerung und zum Transport von Muscheln **36,** beispielsweise angeordneten Miesmuscheln. Es sind nunmehr scheibenförmige Befeuchtungsmitteln **37** (aus Bioschwamm) in mehreren radialen Ebenen übereinander vorgesehen. Immer zwischen zwei scheibenförmige Befeuchtungsmitteln **37** befindet sich ein mit der Luftzufuhrvorrichtung **24** verbundener Ring **47** mit einer Vielzahl von Luftverteilern **26** (Ausströmer). Der Ring **47** kann zusätzlich als Abstandshalter zwischen zwei benachbarten scheibenförmigen Befeuchtungsmitteln **37** dienen. Ebenfalls dazwischen ist ein Maschengitter **38** angeordnet, das ebenfalls als Abstandshalter zwischen zwei benachbarten scheibenförmigen Befeuchtungsmitteln **37** dienen kann. Alle Maschengitter **38** bilden eine Fixiervorrichtung **39** für die Muscheln **36.** Gezeigt ist die nur leicht geneigte, aufrechte Positionierung der Muscheln, beispielsweise für Miesmuscheln (Austern sollten in horizontaler Körperlage transportiert werden). Das Maschengitter **38** kann beispielsweise aus einem weichen Kunststoff bestehen. Die Maschenweite ist so gewählt, dass darin immer nur eine Muschel **36** positionierbar ist (vertikal, schräg oder horizontal).

Die **Fig.** 4 zeigt eine schematische Draufsicht auf die Fixiervorrichtung **39** mit dem Maschengitter **38.** Zu erkennen sind in der radialen Ebene sechseckige Maschen **40,** in denen die Muscheln **36** einfach und verrutschsicher positioniert werden können (aufrecht diagonal und/oder horizontal). Die Fixiervorrichtung **39** kann so ausgestaltet sein, dass nur eine oder auch mehrere Sorten von marinen Organismen, beispielsweise zwei verschiedene Muschelsorten, gleichzeitig gelagert und transportiert werden können.

Die **Fig.** 5 schließlich zeigt eine Ansicht der Transportvorrichtung **01** im Bereich des Deckels **03** des Transportbehälters **02.** Im gezeigten Ausführungsbeispiel ist am Deckel **03** noch eine zylindrische Abdeckung **41** angeordnet, die insbesondere den Griff **33** trägt und die verschiedenen Ventile 11, **25, 27** schützt. Unterhalb der Abdeckung **41** ist am Deckel **03** ein Futtertank **42** angeordnet, der über eine Rohrleitung **43** und ein Futterventil **44** mit der Wasserzufuhrvorrichtung **10** verbunden ist. Der Futtertank **42** ist mit einer Nährlösung **45** zur Versorgung der eingebrachten Organismen über die Wasserzufuhrvorrichtung **10** gefüllt. Das Futterventil **44** dient dabei der Zu- und Abschaltung der Nährstoffzufuhr. Des Weiteren ist eine Druckanzeige **46** am Zufuhrventil **25** der Luftzufuhreinrichtung **24** zur Überwachung des Drucks in der Transportkartusche **12** angeordnet. Ein unerwünschter Überdruck wird über das einstellbare Abfuhrventil **27** der Luftzufuhrvorrichtung **24** abgelassen.

### Bezugszeichenliste

- **01**: Transportvorrichtung
- **02**: Transportbehälter
- **03**: Deckel von 02
- **04**: Bodenablauf
- **05**: Ventil
- **06**: Endmuffe
- **07**: Ausschnitt
- **08**: Gummiring
- **09**: Befeuchtungselement
- **10**: Wasserzufuhrvorrichtung
- **11**: weiteres Ventil
- **12**: Transportkartusche
- **13**: Wandung von 12
- **14**: obere Stirnseite von 12
- **15**: untere Stirnseite von 12
- **16**: Kartuschendeckel
- **17**: erstes Sieb
- **18**: weiteres Sieb
- **19**: Abstandshalter
- **20**: Durchgangsöffnung
- **21**: Spalt
- **22**: stabförmiges Befeuchtungselement
- **23**: Biofilter
- **24**: Luftzufuhrvorrichtung
- **25**: Zufuhrventil
- **26**: Luftverteiler
- **27**: Abfuhrventil
- **28**: Luftschlauch
- **29**: Luftrohr
- **30**: Pumpe
- **31**: Batterie
- **32**: Transportgurt
- **33**: Transportgriff
- **34**: Gestell
- **35**: Transportmittel
- **36**: mariner Organismus (Muschel)
- **37**: scheibenförmiges Befeuchtungselement
- **38**: Maschengitter
- **39**: Fixiervorrichtung
- **40**: Masche von 38
- **41**: Abdeckung von 03
- **42**: Futtertank
- **43**: Rohrleitung
- **44**: Futterventil
- **45**: Nährlösung
- **46**: Druckanzeige
- **47**: Ring (mit 24 und 26 verbunden)

## Patentansprüche

1. Tragbare Transportvorrichtung (01) zum Lebendtransport von marinen Organismen mit einem durch einen Deckel (03) verschließbaren Transportbehälter (02), mehreren, darin angeordneten Befeuchtungselementen (09) und einer Wasserzufuhrvorrichtung (10), über die Wasser den Befeuchtungselementen (09) zuführbar ist, wobei zugeführtes Wasser über einen Bodenablauf (04) am Transportbehälter (02) abführbar ist,
**dadurch gekennzeichnet, dass**
in dem Transportbehälter (02) eine entnehmbare Transportkartusche (12) zur Aufnahme der marinen Organismen (36) und der Befeuchtungselemente (09) angeordnet ist, die mit einer Wandung (13) sowie einer oberen Stirnseite (14) und einer unteren Stirnseite (15) ausgebildet ist, wobei die obere Stirnseite (14) durch den Deckel (03) des Transportbehälters (02) hindurchgeführt und von einem Kartuschendeckel (16) gebildet ist und in der Wandung (13) in der Nähe zum Kartuschendeckel (16) ein erstes Sieb (17) sowie in der unteren Stirnseite (15) zumindest ein weiteres Sieb (18) angeordnet sind, wobei die Wandung (13) und die untere Stirnseite (15) mit einem Abstand zum Transportbehälter (02) angeordnet sind.

2. Tragbare Transportvorrichtung (01) nach Anspruch 1,
**dadurch gekennzeichnet, dass**
der Transportbehälter (02) und die Transportkartusche (12) zylinderförmig ausgebildet sind.

3. Tragbare Transportvorrichtung (01) nach Anspruch 1 oder 2,
**dadurch gekennzeichnet, dass**
eine Luftzufuhrvorrichtung (24) zumindest mit einem Zufuhrventil (25), zumindest einem Luftverteiler (26) und einem Abfuhrventil (27) vorgesehen ist, wobei das Zufuhrventil (25) und das Abfuhrventil (27) im Kartuschendeckel (16) angeordnet sind.

4. Tragbare Transportvorrichtung (01) nach Anspruch 3,
**dadurch gekennzeichnet, dass**
der Transportbehälter (02) druckdicht mit dem Deckel (03) verschließbar ist und das Zufuhrventil (25) der Luftzufuhrvorrichtung (24) eine Druckanzeige (45) aufweist, wobei das Abfuhrventil (27) der Luftzufuhrvorrichtung (24) als einstellbares Überdruckventil ausgebildet ist.

5. Tragbare Transportvorrichtung (01) nach Anspruch 3 oder 4,
**dadurch gekennzeichnet, dass**
der zumindest eine Luftverteiler (26) in der Transportkartusche (12) in der Nähe der unteren Stirnseite (15) oder mehrere Luftverteiler (26) in mehreren Radialebenen übereinander angeordnet sind.

6. Tragbare Transportvorrichtung (01) nach einem der Ansprüche 3 bis 5,
**dadurch gekennzeichnet, dass**
die Luftzufuhreinrichtung (24) eine Batterie (31) zur Energieversorgung umfasst.

7. Tragbare Transportvorrichtung (01) nach einem der vorangehenden Ansprüche,
**dadurch gekennzeichnet, dass**
die Transportkartusche (12) im Transportbehälter (02) mittels zumindest eines Abstandshalters (19) zentriert anordenbar ist, wobei der Abstandshalter (19) die Wasserzufuhrvorrichtung (10) nicht behindert.

8. Tragbare Transportvorrichtung (01) nach einem der vorangehenden Ansprüche,
**dadurch gekennzeichnet, dass**
die Transportkartusche (12) und der Transportbehälter (02) zumindest im Bereich der eingebrachten Transportkartusche (12) transparent ausgebildet sind.

9. Tragbare Transportvorrichtung (01) nach einem der vorangehenden Ansprüche,
**dadurch gekennzeichnet, dass**
die Befeuchtungselemente (09) stabförmig oder scheibenförmig ausgebildet und lose in die Transportkartusche (12) einbringbar sind, wobei die stabförmigen Befeuchtungselemente (22) über die Höhe der Transportkartusche (12) ein vielfach verzweigtes Gerüst bilden und die scheibenförmigen Befeuchtungselemente (27) sich über den gesamten Querschnitt der Transportkartusche (12) erstrecken und über deren Höhe ein beabstandetes Etagensystem bilden.

10. Tragbare Transportvorrichtung (01) nach einem der vorangehenden Ansprüche,
**dadurch gekennzeichnet, dass**
die Befeuchtungselemente (09) aus einem schwammartigen Schaumstoffmaterial bestehen, das Wasser aufsaugen und halten kann.

11. Tragbare Transportvorrichtung (01) nach einem der vorangehenden Ansprüche,
**dadurch gekennzeichnet, dass**
die Befeuchtungselemente (09) gleichzeitig als Biofilter (23) ausgerüstet sind.

12. Tragbare Transportvorrichtung (01) nach einem der vorangehenden Ansprüche,
**dadurch gekennzeichnet, dass**
eine Fixiervorrichtung (39) mit zumindest einem Maschengitter (38) zur Lagerung der marinen Organismen (36) vorgesehen ist, die lose in die Transportkartusche (12) einbringbar ist.

13. Tragbare Transportvorrichtung (01) nach Anspruch 12,
**dadurch gekennzeichnet, dass**
die Maschen (40) der Maschengitter (38) radial sechseckig ausgebildet sind.

14. Tragbare Transportvorrichtung (01) nach einem der vorangehenden Ansprüche,
**dadurch gekennzeichnet, dass**
ein mit Nährlösung (45) füllbarer Futtertank (42) am Deckel (03) angeordnet ist, der mit der Wasserzufuhreinrichtung (10) verbunden ist.

15. Tragbare Transportvorrichtung (01) nach einem der vorangehenden Ansprüche,
**dadurch gekennzeichnet, dass**
zumindest ein Transportgriff (33) und/oder Transportgurt (32) am Transportbehälter (02) befestigt ist.

16. Tragbare Transportvorrichtung (01) nach einem der vorangehenden Ansprüche,
**dadurch gekennzeichnet, dass**
die Wasserzufuhrvorrichtung (10) als Durchflusssystem ausgebildet ist.

17. Tragbare Transportvorrichtung (01) nach einem der Ansprüche 3 bis 15,
**dadurch gekennzeichnet, dass**
die Wasserzufuhrvorrichtung (10) als Kreislaufsystem ausgebildet ist, wobei eine Luftzufuhreinrichtung (24) vorgesehen ist.

18. Anwendung der tragbaren Transportvorrichtung (01) nach einem der vorangehenden Ansprüche,
**dadurch gekennzeichnet, dass**
eine Anordnung von mehreren Transportvorrichtungen (01) in einem Gestell (34) vorgesehen ist, wobei das Gestell (34) auf einem bewegbaren Transportmittel (35) angeordnet ist.

19. Anwendung der tragbaren Transportvorrichtung (01) nach einem der vorangehenden Ansprüche,
**dadurch gekennzeichnet, dass**
eine Nutzung als stationäres Aquakultursystem vorgesehen ist.

20. Anwendung der tragbaren Transportvorrichtung (01) nach einem der vorangehenden Ansprüche,
**dadurch gekennzeichnet, dass**
eine Nutzung für Krustentiere, Mollusken (36), Würmer, Pflanzen oder Makroalgen vorgesehen ist.
